# EUROPÄISCHE PATENTSCHRIFT

(11) **EP 0 426 961 B1**
(45) Veröffentlichungstag und Bekanntmachung des Hinweises auf die Patenterteilung: **06.07.1994**
(21) Anmeldenummer: 90116559.7
(22) Anmeldetag: 29.08.1990
(51) Int. Cl.: H04L 5/14

(54) **Verfahren zur Datenübertragung nach dem Zeitgetrennntlage-Prinzip**
Method for data transmission according to the time-sharing principle
Méthode de transmission de données d'après le principe de communication à l'alternat

(30) Priorität: 06.11.1989 CH 3991/89
(43) Veröffentlichungstag der Anmeldung: 15.05.1991
(73) Patentinhaber: SIEMENS-ALBIS AKTIENGESELLSCHAFT, 8047 Zürich (CH); SIEMENS AKTIENGESELLSCHAFT, 80333 München (DE)
(72) Erfinder: Klaus, Thomas,, CH-8152 Glattbrugg (CH); Marending, Peter,, CH-8905 Arni (CH); Wenger, Bruno,, CH-8804 Au / ZH (CH)

(56) Entgegenhaltungen:
- EP-A- 0 047 970
- EP-A- 0 193 141
- US-A- 4 514 840
- THE POST OFFICE ELECTRICAL ENGINEERS' JOURNAL, Band 68, Teil 1, April 1975,Seiten 22-28, London, GB; W. NEIL et al.: "Experimental packet-switched service: Procedures and protocols. Part 2 - Transmission procedures"

## Beschreibung

Die vorliegende Erfindung betrifft ein Verfahren nach dem Oberbegriff des Patentanspruchs 1 und eine Schaltungsanordnung zur Durchführung des Verfahrens nach dem Oberbegriff des Patentanspruchs 6.

Zur bidirektionalen Übertragung von zwei Datenströmen über eine Zweidrahtleitung oder einen Lichtwellenleiter wird oft ein Zeitgetrenntlage-Verfahren angewendet. Zeitgetrenntlage-Verfahren, die z.B. in E.Hölzler/H.Holzwarth, Pulstechnik, Band 2, (2. Auflage, Berlin usw. 1984) Seite 408ff. beschrieben werden, basieren auf dem schnellen Wechsel zwischen den beiden möglichen Übertragungsrichtungen und werden deshalb auch als "Ping-Pong"-Verfahren bezeichnet. Durch Zeitintervalle getrennt werden dabei periodisch Datenpakete zwischen zwei Sende-/Empfangsstationen, z.B. zwischen einer Vermittlungsstelle und einem Teilnehmer, ausgetauscht. Zu Beginn eines Zyklus wird z.B. ein Datenpaket von einer Sende-/Empfangsstation SE1 abgeschickt, das nach einer Laufzeit t_{L} bei der Sende-/Empfangsstation SE2 eintrifft. Nach Ablauf eines Sicherheitsintervalls t_{S} wird in Gegenrichtung ein Datenpaket von der Station SE2 zur Station SE1 gesandt. Nach dem Empfang des Datenpaketes in Station SE1 wird ein weiterer Zyklus Z gestartet. Der Paketbittakt und der Pakettakt, d.h. der Takt, mit dem die Bits eines Paketes vom Sender abgegeben werden und der Takt mit dem die Pakete als Ganzes übertragen werden, ist entweder von der Bitrate des ankommenden Signals oder von der Taktfrequenz eines freilaufenden Oszillators abgeleitet. Damit die bidirektionalen Datenströme im wechselseitigen Paketbetrieb übertragen werden können, muss der Paketbittakt mehr als das Doppelte der Bitrate der ankommenden Signale betragen. Da die Pakettakte bzw. die in beiden Stationen SE1, SE2 ablaufenden Zyklen Z von nominell gleichen, jedoch leicht voneinander abweichenden, d.h. plesiochronen Taktfrequenzen abgeleitet sind, müssen sie aufeinander synchronisiert werden. Dabei ist darauf zu achten, dass bei der gegenseitigen Verschiebung der übertragenen Datenpakete das Sicherheitsintervall t_{S} nicht überschritten wird. Allgemein erfolgt die Synchronisierung indem der Pakettakt einer Station konstant gehalten und der zweite darauf synchronisiert wird. Das heisst, nach einer bestimmten Abweichung des zweiten Pakettaktes, welche die Länge des Sicherheitsintervalls t_{S} nie überschreiten darf, wird die Phasenlage des zweiten Pakettaktes um einen bestimmten Betrag korrigiert. Diese Korrektur wird allgemein nach dem Stopf-Verfahren durchgeführt. Eine Phasenkorrektur eines normalerweise leicht zu hoch gewählten Pakettaktes erfolgt bei diesem Verfahren durch das bedarfsweise Einfügen von Stopfbits in ein zu übertragendes Datenpaket. Nach der Übertragung des gestopften Datenpakets werden die Stopfbits im Empfänger mittels zusätzlich übertragener Informationsbits, welche die Position der eingefügten Bits innerhalb des Pakets angeben, wieder entfernt. Nebst dem dafür notwendigen Aufwand ergibt sich bei der Datenübertragung ein erhöhter Jitter, der im Empfänger hauptsächlich beim Entfernen der Stopfbits entsteht. Dies erfordert auf der Empfangsseite wiederum eine aufwendige Detektionsstufe, die eine optimale Jitterverträglichkeit aufweisen muss.

Der vorliegenden Erfindung liegt daher die Aufgabe zugrunde, ein Verfahren und eine Schaltungsanordnung anzugeben, die eine einfache und jitterfreie Datenübertragung nach dem Zeitgetrenntlage-Prinzip erlauben.

Die Lösung dieser Aufgabe gelingt erfindungsgemäss mit Massnahmen, wie sie im Kennzeichen der Ansprüche 1 bzw. 6 angegeben sind. Vorteilhafte Ausgestaltungen der Erfindung sind in weiteren Ansprüchen angegeben.

Die Erfindung wird nachfolgend anhand von Zeichnungen beispielsweise näher erläutert. Dabei zeigt:
- Fig. 1: Zeitdiagramme für die wechselseitige Paketübertragung bei maximaler und minimaler Übertragungsdistanz zwischen zwei Sende-/Empfangsstationen
- Fig. 2: Ein Blockschaltbild einer ersten Sende-/Empfangsstation
- Fig. 3: Ein Blockschaltbild einer zweiten Sende-/Empfangsstation

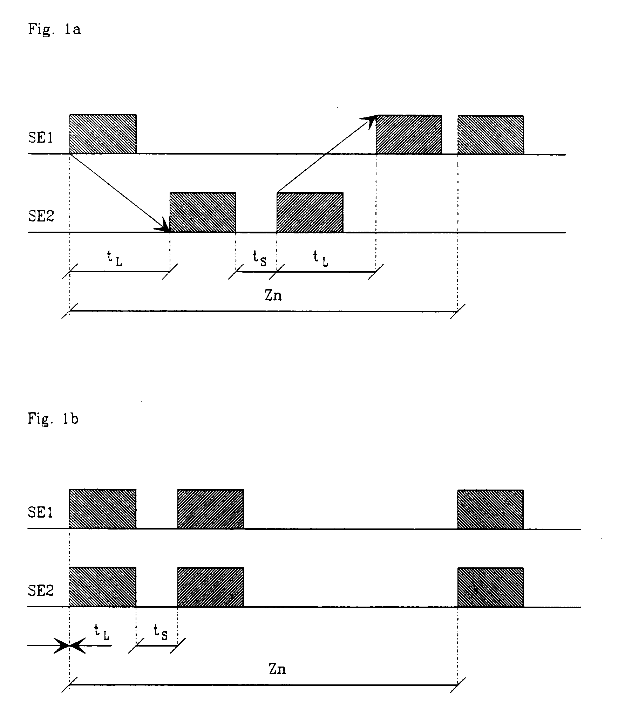

Fig. 1 zeigt den zeitlichen Ablauf der wechselseitigen Paketübertragung zwischen zwei Sende-/Empfangsstationen SE1, SE2 während einem Zyklus Zₙ. Zu Beginn des Zyklus Zₙ sendet die Station SE1 ein Datenpaket zur Station SE2, welches nach der Laufzeit t_{L} in der Station SE2 empfangen wird. Nach dem Ablauf eines Sicherheitsintervalls t_{S} sendet die Station SE2 ein Datenpaket zur Station SE1, welches wiederum nach der Laufzeit t_{L} beim Empfänger eintrifft. Falls die Zyklen Z in beiden Stationen SE1, SE2 synchron ablaufen, da sie z.B. von derselben Taktfrequenz abgeleitet sind, sind keine gegenseitigen Verschiebungen der Sende- und Empfangsabläufe in den beiden Stationen SE1, SE2 zu erwarten. Normalerweise werden die Zyklen Z und folglich auch die Pakettakte von nominell gleichen, jedoch minimal unterschiedlichen Taktfrequenzen abgeleitet. So können z.B. in den Stationen SE1, SE2 freilaufende Oszillatoren verwendet werden, welche Signale von nominell gleicher Frequenz abgeben. Tatsächlich treten jedoch minimale Frequenzabweichungen auf. Diese Abweichungen sind z.B. auf die Verwendung unterschiedlicher Quarze oder auf thermische Effekte zurückzuführen. Als Folge dieser Abweichungen treten in den Stationen SE1, SE2 Verschiebungen der Zyklen Z und folglich der Sende- und Empfangszustände auf. Aus diesem Grund werden die Zyklen Z in Abhängigkeit der sie generierenden Station SE1 oder SE2 nachfolgend als Zyklen ZSE1 bzw. ZSE2 bezeichnet. Kollisionen zwischen den wechselseitig ausgetauschten Datenpaketen werden bei kleinen Verschiebungen der in beiden Stationen SE1, SE2 ablaufenden Zyklen ZSE1, ZSE2 vorerst durch das Sicherheitsintervall t_{S} verhindert. Bei einer weiteren Verschiebung, die die Länge des Sicherheitsintervalls t_{S} zu übertreten droht, wird eine korrektive Angleichung der Zyklen ZSE1, ZSE2 erforderlich. Dieser erfindungsgemäss durchgeführte Synchronisierungsvorgang wird weiter unten beschrieben. Fig. 1a und 1b zeigen weiter den Einfluss der Laufzeiten t_{L} auf die Paketübertragung. Die Länge der Zyklen Z bzw. der Pakettakt und die Paketbitrate müssen dabei den maximal zu erwartenden Laufzeiten t_{L} angepasst werden. Die Länge der Zyklen Z entspricht dabei mindestens der Summe der doppelten Paketlänge, der doppelten Laufzeit t_{L}, dem Sicherheitsintervall t_{S} und mindestens der tolerierten bzw. unkorrigierten Zyklusverschiebung. Die Paketbitrate wird bei der Verwendung von tieferen Pakettakten entsprechend erhöht, so dass die geforderte Kapazität des Übertragungskanals erhalten bleibt. Da der in Fig. 1b verwendete Übertragungsweg sehr kurz ist, sind die auftretenden Laufzeiten t_{L} praktisch gleich Null. Durch die Anpassung der Zyklen Z könnte folglich die Übertragungskapazität des Kanals erhöht oder eine tiefere Paketbitrate gewählt werden.

Die Synchronisierung der Zyklen ZSE1, ZSE2 erfolgt durch Anpassung des Zyklus ZSE2 an den unverändert ablaufenden Zyklus ZSE1 durch bedarfsweise Verkürzung oder Verlängerung der Zykluslänge. Dabei kann die Grösse der korrektiven Veränderung entsprechend der gemessenen Abweichung gewählt werden. Weiterhin ist es bei grösseren Abweichungen möglich, kleinere Korrekturen über mehrere aufeinander folgende Zyklen ZSE2 vorzunehmen. Bei kleineren Korrekturwerten ist es natürlich auch möglich, die Grenzen enger zu wählen, nach deren Überschreiten eine Korrektur eingeleitet wird. Die Zyklen ZSE2 werden in der Folge verändert, indem die Paketlängen entsprechend verändert werden. Das bekannte Stopfverfahren erlaubt dabei nur die Verlängerung der Datenpakete bzw. der Zyklen ZSE2 durch das Einfügen von Dummy-Bits, welche keine Informationen enthalten. Zusätzlich muss dem Empfänger mitgeteilt werden, an welchen Positionen des Datenpaketes diese Bits eingefügt wurden. Ferner sollen die Zyklen ZSE2 bei diesem Verfahren im Durchschnitt minimal kürzer sein als die Zyklen ZSE1, damit eine Synchronisierung durch die Verlängerung der Zyklen ZSE2 möglich wird. Durch das Entfernen der Dummy-Bits entsteht empfangsseitig ein Jitter, der hohe Anforderungen an die Jitterverträglichkeit der Eingangsstufen stellt. Das erfindungsgemässe Verfahren erlaubt die Synchronisierung der Zyklen ZSE1, ZSE2 unter Vermeidung der erwähnten Probleme. Dabei werden die Zyklen ZSE2 in ihrer Länge verändert, und zwar verkürzt oder verlängert, indem die Datenpakete um ein oder mehrere Datenbits ergänzt oder verkürzt werden. Einem zu verlängernden Datenpaket werden folglich Nutz- und nicht Dummy-Bits zugefügt. Die Position dieser Nutz-Bits innerhalb des Datenpaketes muss dem Empfänger nicht mitgeteilt werden, da sie sich immer am Ende des Paketes befinden. Dem Empfänger muss folglich nur mitgeteilt werden, ob und um welches Mass ein übertragenes Datenpaket verändert wurde. Diese Information wird vorteilhafterweise innerhalb eines Zusatzkanals jeweils zu Beginn des Datenpaketes übertragen. Damit der Empfänger mit grosser Sicherheit nie ausser Takt geraten kann, wird diese Information vorteilhafterweise mehrfach im veränderten bzw. korrigierten Datenpaket untergebracht. Bei auftretenden Störungen kann folglich angenommen werden, dass die im Empfänger benötigte Information zumindest einmal korrekt übertragen wird.

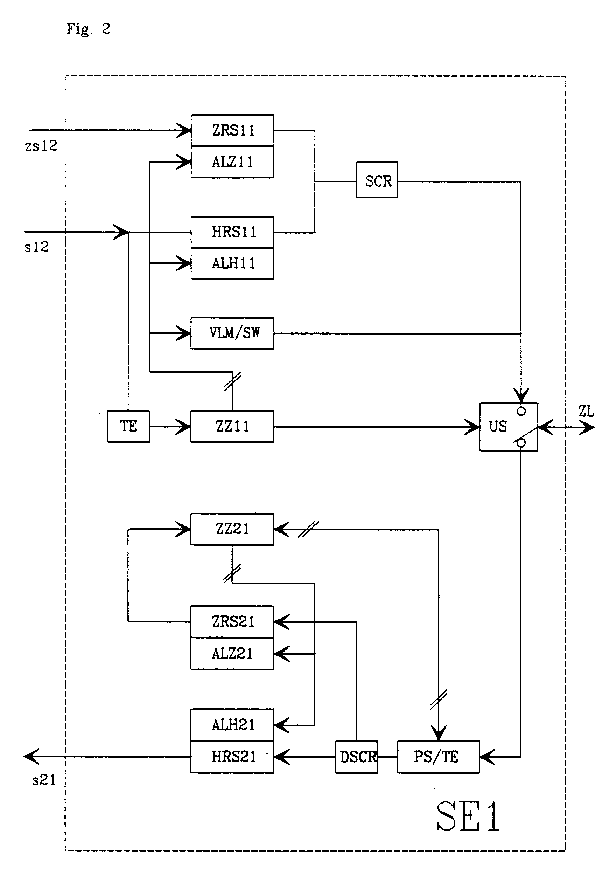

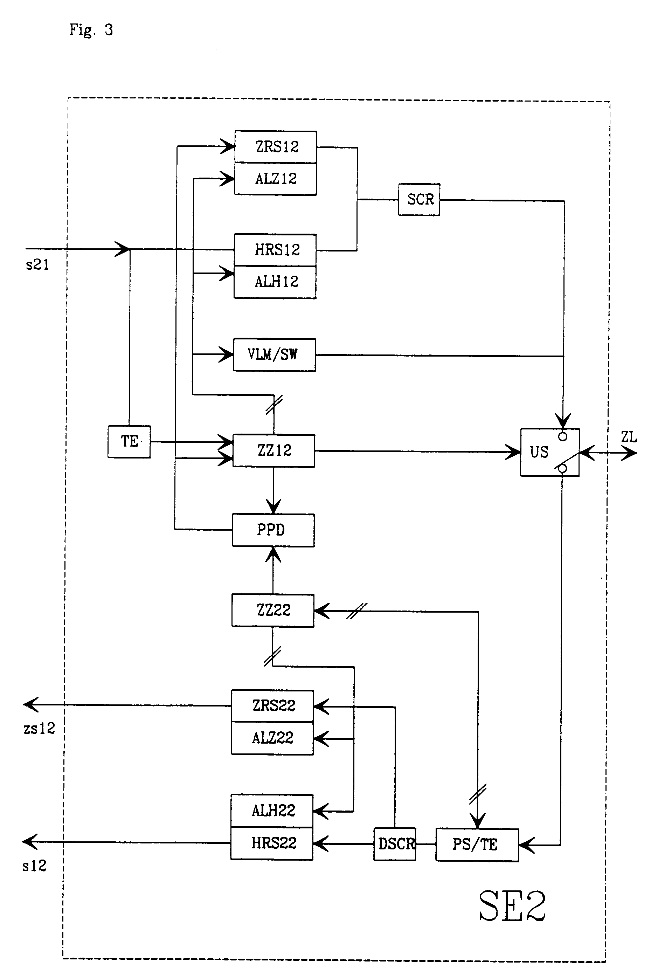

Anhand von Fig.2 und Fig.3 wird nachfolgend eine Schaltungsanordnung zur Durchführung des erfindungsgemässen Verfahrens näher erläutert. Fig.2 zeigt den Sende- und den Empfangsteil der Station SE1, die über einen Umschalter US an eine Zweidrahtleitung (oder einen Lichtwellenleiter) ZL angeschlossen sind. Dabei ist sende- und empfangsseitig je ein Zykluszähler ZZ11 bzw. ZZ21 über zwei Adressierlogikeinheiten ALH11, ALZ11 bzw. ALH21, ALZ21 mit einem Hauptringspeicher HRS11 bzw. HRS21 und einem Zusatzringspeicher ZRS11 bzw. ZRS21 verbunden. In allen verwendeten Ringspeichern werden durch die Adressierlogikeinheiten ein Einlese- und ein Auslesezeiger bewegt, die zyklisch alle Speicherzellen anwählen. Die Zykluszähler ZZ11 und ZZ12 sind ferner mit einer Speicherstufe VLM/SW verbunden, die ein Vorlaufmuster und ein Synchronwort enthält. Der Zykluszähler ZZ11, dem über eine Taktextraktionsstufe TE das Taktsignal eines zu übertragenden Signals s₁₂ zugeführt wird, steuert die Adressierlogikeinheiten ALH11, ALZ11 derart, dass das Signal s₁₂ mit dem extrahierten Takt in den Hauptringspeicher HRS11 und ein Zusatzsignal zs₁₂ mit einem entsprechend tieferen Takt in den Zusatzringspeicher ZRS11 eingelesen werden. Der Einlesevorgang der zu übertragenden Daten erfolgt dabei kontinuierlich über den ganzen im Zykluszähler ZZ11 erzeugten Zyklus ZSE1. Innerhalb dieses Zyklus ZSE1 werden die Adressierlogikeinheiten ALH11, ALZ11 vom Zykluszähler ZZ11 ferner derart gesteuert, dass die in den Ringspeichern HRS11, ZRS11 befindlichen Daten paketweise mit dem Paketbittakt bzw. mit mehr als dem doppelten Einlesetakt abgegeben werden. Die Ringspeicher HRS11, ZRS11 und die Speicherstufe VLM/SW werden dabei derart gesteuert, dass zuerst das Vorlaufmuster und nachfolgend das Synchronwort aus der Speicherstufe VLM/SW, darauf ein Datenpaket vom Zusatzringspeicher ZRS11 und sofort anschliessend ein Datenpaket vom Hauptringspeicher HRS11 abgegeben werden. Die Schaltung wirkt folglich als Multiplexer indem sie die Teildatenpakete des Vorlaufmusters und Synchronworts, des Haupt- und Zusatzkanals zeitgetrennt als Gesamtdatenpaket abgibt. Nach dem gleichen Prinzip könnten dem Datenpaket folglich die Inhalte weiterer Datenspeicher hinzugefügt werden. Ferner könnten über die jeweiligen Ringspeicher die Daten verschiedener Kanäle im Multiplex - Verfahren eingelesen werden. Die Länge dieses Gesamtpaketes ist jeweils kürzer als die Hälfte eines Zyklus ZSE1, da während der zweiten Hälfte dieses Zyklus ZSE1 ein Datenpaket gleicher Länge von der Station ZSE2 empfangen wird. Der Zykluszähler ZZ11 steuert dementsprechend einen Umschalter US, der abwechslungsweise den Sender und den Empfänger an die Zweidrahtleitung (oder den Lichtwellenleiter) ZL anschliesst. Der Pakettakt bzw. die Länge des Zyklus ZSE1 und der Paketbittakt sind dabei derart gewählt, dass die Ringspeicher HRS11, ZRS11 nie überlaufen oder vollständig geleert werden. Falls die Paketlange des vom Hauptringspeicher abgegebenen Datenpaketes z.B. genau einem Viertel der Zykluslänge ZSE1 entspricht, so muss der Paketbittakt genau dem Vierfachen des Einlesetaktes entsprechen. Folglich bewegt die Adressierlogikeinheit ALH11 im Hauptringspeicher HRS11 den Einlesezeiger kontinuierlich und während einem Viertel der Zeit den Auslesezeiger mit vierfacher Geschwindigkeit im Vergleich zum Einlesezeiger. Die von den Ringspeichern HRS11, ZRS11 abgegebenen Teildatenpakete werden in einer Stufe SCR verscrambled bzw. verwürfelt, bevor sie dem Umschalter US zugeführt werden. Durch die Verwendung eines Scramblers bzw. Verwürflers wird dabei sichergestellt, dass genügend Information zur Taktrückgewinnung im übertragenen Datensignal enthalten ist. Die Funktion einer Scrambler- und Descramblerstufe wird z.B. in P.Bocker, Datenübertragung, Band 1,(2.Auflage,Berlin usw. 1983)S.172, 173 beschrieben.

Von der Station SE2 übermittelte Datenpakete werden über den Umschalter US an die Empfangsstufe bzw. an die Paketsynchronisier- und Taktextraktionsstufe PS/TE abgegeben. Dabei wird zuerst aus dem Vorlaufmuster der Paketbittakt extrahiert und an den Zykluszähler ZZ21 abgegeben. Durch das nachfolgende Synchronwort wird der Zykluszähler ZZ21 auf den Pakettakt bzw. den Zyklus ZSE2 synchronisiert. Die dem Synchronwort folgenden Datenbits werden den Ringspeichern HRS21, ZRS21 über eine Descramblerstufe DSCR durch den Zykluszähler ZZ21 in korrekter Länge zugewiesen. Der Zykluszähler ZZ21 und die Ringspeicher HRS21, ZRS21 wirken folglich als Demultiplexer indem der Zykluszähler ZZ21 nach Erscheinen des Synchronworts dem Zusatzringspeicher ZRS21 ein Datenpaket von jeweils konstanter Länge zuweist und nachfolgend das restliche Datenpaket, welches von Zyklus zu Zyklus eine unterschiedliche Länge aufweist, dem Hauptringspeicher HRS21 mit korrekter Länge zuweist. Die Information bezüglich der korrekten Länge des dem Hauptringspeicher HRS21 zuzuweisenden Datenpaketes wird jeweils über den zusatzkanal übertragen. Diese Information wird folglich sofort vom Zusatzringspeicher ZRS21 an den Zykluszähler ZZ21 abgegeben. Der Zykluszähler ZZ21 kann dem Hauptringspeicher HRS21 somit die korrekte Anzahl einzulesender Datenbits zuweisen. Der Inhalt des Hauptringspeichers HRS21 wird dabei als Signal s21 mit einem Bruchteil des Paketbittakts kontinuierlich wieder abgegeben.

Die in Fig.3 gezeigten Zykluszähler ZZ12, ZZ22, Adressierlogikeinheiten ALZ12, ALH12, ALZ22, ALH22, Ringspeicher HRS12, ZRS12, HRS22, ZRS22, die Taktextraktionsstufe TE, die Scramblerstufe SCR, der Umschalter US, die Taktextraktions- und Paketsynchronisierstufe PS/TE und die Descramblerstufe DSCR der Station SE2 sind in gleicher Weise miteinander verbunden wie in Station SE1. Die Funktionsweise dieser Bausteine ist mit wenigen nachfolgend beschriebenen Ausnahmen dieselbe wie unter Fig.2 beschrieben.

Die von der Station SE1 abgesendeten Datenpakete weisen immer eine konstante Länge bzw. konstante Anzahl Datenbits auf. Nach dem Empfang des Synchronworts weist der Zykluszähler ZZ22 den Ringspeichern ZRS22, HRS22 demnach jeweils eine konstante Anzahl Datenbits zu. Über den Zusatzkanal übermittelte Informationen werden im Zykluszähler ZZ22 folglich nicht benötigt, so dass dieser Kanal zur Übertragung von anwenderspezifischen Daten verwendet werden kann. Diese Daten werden vom Zusatzringspeicher mit dem Signal zs12 abgegeben. Die erwähnten sendeseitigen Bausteine der Station SE2 funktionieren gleich wie in Station SE1, falls keine Phasenverschiebung der Zyklen ZSE1, ZSE2 vorliegt.

Zusätzlich zu den beschriebenen Bausteinen ist jedoch ein Phasendetektor PPD vorgesehen, dessen Eingänge mit den Zykluszählern ZZ12, ZZ22 verbunden sind und dessen Ausgang je mit einem Eingang des Zykluszählers ZZ12 und des Zusatzringspeichers ZRS12 verbunden ist. Dem Phasendetektor PPD werden dabei die Phasenlagen der Zyklen ZSE1 und ZSE2 bzw. die Zählerstände der Zykluszähler ZZ12, ZZ22 zugeführt. Wie einleitend beschrieben, werden die Zyklen ZSE1, ZSE2 in den Stationen SE1 bzw. SE2 von einem Signaltakt oder dem Takt eines freilaufenden Oszillators abgeleitet. Der Zyklus ZSE2 der Station SE2 wird innerhalb des Zykluszählers ZZ12 erzeugt. Der Zyklus ZSE1, welcher innerhalb des Zykluszählers ZZ11 erzeugt wird, wird in der Station SE2 mittels des übertragenen Synchronwortes im Zykluszähler ZZ22 wieder erstellt. Der Phasenunterschied der tatsächlich in beiden Stationen SE1, SE2 ablaufenden Zyklen ZSE1, ZSE2 wird somit im Phasendetektor PPD ermittelt. Falls die Phasenverschiebung eine vorgegebene Anzahl n Zähleinheiten überschreitet, wird eine Phasenkorrektur eingeleitet. Der Zykluszähler ZZ12, der vom Phasendetektor den Korrekturbefehl erhält, verändert in der Folge einen Zyklus ZSE2 um eine bestimmte Anzahl, z.B. n Zählereinheiten. Mit der Veränderung des Zyklus ZSE2 veranlasst der Zykluszähler ZZ12, dass gleichzeitig das aus dem Hauptringspeicher HRS12 ausgelesene Teildatenpaket um dieselbe Anzahl Datenbits verkürzt oder verlängert wird. Dem Zusatzringspeicher ZRS12 wird ferner vom Phasendetektor PPD mitgeteilt und eingeschrieben um wieviele Bits das während dem korrigierten Zyklus ZSE2 aus dem Hauptringspeicher HRS12 ausgelesene Teildatenpaket verändert wurde. Mittels dieser Information, die im Zusatzkanal übertragen wird, kann der Empfänger der Station SE1, wie oben beschrieben, das veränderte Datenpaket korrekt einlesen.

Zur Erhöhung des Datendurchsatzes durch die Ringspeicher können ferner Serie - / Parallel - Wandler und entsprechende Adressierlogik- und Speichereinheiten vorgesehen werden, wodurch das parallele Einlesen von ganzen Datenwörtern ermöglicht wird. Die Phasenkorrektur erfolgt in diesem Fall vorteilhafterweise durch Veränderung des Datenpaketes um ein ganzzahliges Vielfaches eines Datenwortes.

## Patentansprüche

1. Verfahren zur Datenübertragung nach dem Zeitgetrenntlage-Prinzip, mit zwei bidirektional kontinuierlich verlaufenden, plesiochron getakteten Datenströmen, die in zwei miteinander über eine Leitung verbundenen Sende-/Empfangsstationen (SE1; SE2) sendeseitig in Datenpakete aufgeteilt, paketweise in einem Zyklus (Zn) von der Station (SE1) zur Station (SE2) und anschliessend von der Station (SE2) zur Station (SE1) übertragen und empfangsseitig wieder in einen kontinuierlichen Datenstrom umgewandelt werden, **dadurch gekennzeichnet,** dass die Phasenverschiebung zwischen den je von den extrahierten Takten der zu übertragenden Datensignale oder von den Takten einer freilaufenden Oszillatorstufe abhängigen, plesiochron in beiden Stationen (SE1, SE2) ablaufenden Zyklen (ZSE1; ZSE2) in der einen Station gemessen und jeweils durch eine Verkürzung oder Verlängerung des Zyklus (ZSE2) mit einer entsprechenden Verkürzung oder Verlängerung des während diesem Zyklus zur andern Station gesendeten Datenpaketes um mindestens ein Nutzdatenbit innerhalb vorgegebener Grenzwerte gehalten wird.

2. Verfahren nach Anspruch 1, **dadurch gekennzeichnet**, dass die Datenpakete ein Vorlaufmuster, ein richtungsabhängiges Synchronwort, mindestens einen Zusatzkanal und einen Hauptkanal enthalten.

3. Verfahren nach Anspruch 2, **dadurch gekennzeichnet**, dass jedes übertragene Datenpaket im Zusatzkanal Informationen über die Veränderung bzw. die Korrektur seiner Länge enthält.

4. Verfahren nach Anspruch 3, **dadurch gekennzeichnet**, dass die Informationen über die Veränderung der Paketlänge mehrfach an unterschiedlichen Stellen des Datenpakets in einem Zusatzkanal enthalten sind.

5. Verfahren nach Anspruch 2, **dadurch gekennzeichnet**, dass die Daten des Hauptkanals und der Zusatzkanäle sendeseitig verwürfelt und empfangsseitig entwürfelt werden.

6. Schaltungsanordnung zur Datenübertragung im Zeitgetrenntlage-Prinzip mit zwei bidirektional kontinuierlich verlaufenden, plesiochron getakteten Datenstromen, die in zwei miteinander über eine Leitung verbundenen Sende-/Empfangsstationen (SE1; SE2) sendeseitig in Datenpakete aufgeteilt, paketweise in einem Zyklus (Zn) von der Station (SE1) zur Station (SE2) und anschliessend von der Station (SE2) zur Station (SE1) übertragen und empfangsseitig wieder in einen kontinuierlichen Datenstrom umgewandelt werden, zur Durchführung eines Verfahrens nach Anspruch 1, **dadurch gekennzeichnet**, dass die Stationen (SE1; SE2) je einen sende- und empfangsseitigen Zykluszähler (ZZ11; ZZ21/ ZZ12; ZZ22) aufweisen, deren Ausgänge über Adressierlogikeinheiten (ALZ11, ALH11; ALZ21, ALH21/ ALZ12, ALH12; ALZ22, ALH22) mit Hauptringspeichern (HRS11; HRS21/ HRS12; HRS22) und Zusatzringspeichern (ZRS11; ZRS21/ ZRS12; ZRS22) verbunden sind, dass die sendeseitigen Zykluszähler (ZZ11; ZZ12) eingangsseitig mit einer Taktextraktionsstufe (TE), deren Eingang ein Datensignal (s₁₂, s₂₁) zugeführt wird, oder mit einem freilaufenden Oszillator und ausgangsseitig mit einer Speicherstufe (VLM/SW) und einem Umschalter (US) verbunden sind, dass die sendeseitigen Ringspeicher (HRS11, ZRS11/ HRS12, ZRS12), denen eingangsseitig Datensignale (s₁₂, zs₁₂/ s₂₁) bzw. ein Korrekturinformationssignal zugeführt werden, sowie die Speicherstufe (VLM/SW) über den Umschalter (US) mit einer Leitung (ZL) verbunden sind, dass die empfangsseitigen Ringspeicher (HRS21, ZRS21/ HRS22, ZRS22), deren Eingänge über den Umschalter (US) und eine Synchronwort- und Taktextraktionsstufe (PS/TE) mit der Leitung (ZL) verbunden sind, die übertragenen Datensignale (s₂₁/ s₁₂, zs₁₂) bzw. das übertragene Korrekturinformationssignal an den Zykluszähler (ZZ21) abgeben, dass die Synchronwort- und Taktextraktionsstufe (PS/TE) extrahierte Taktsignale und Synchronworte an den Zykluszähler (ZZ21) abgibt, und dass die Zykluszähler (ZZ12; ZZ22) über eine Ausgangsleitung mit dem Eingang eines Phasendetektors (PPD) verbunden sind, dessen Ausgang mit Eingängen des Zusatzringspeichers (ZRS12) und des Zykluszählers (ZZ12) verbunden ist.

7. Anordnung nach Anspruch 6, **dadurch gekennzeichnet**, dass die Ausgänge der sendeseitigen Ringspeicher (HRS11, ZRS11/ HRS12, ZRS12) über eine Verwürflerstufe (SCR) mit der Leitung (ZL) verbunden sind und dass die Eingänge der empfangsseitigen Ringspeicher (HRS12, ZRS12/ HRS22, ZRS22) über eine Entwürflerstufe (DSCR) mit der Synchronwort- und Taktextraktionsstufe (PS/TE) verbunden sind.

8. Anordnung nach Anspruch 6 oder 7, **dadurch gekennzeichnet**, dass allen verwendeten Ringspeichern ein Serie - /Parallel-Wandler vor- und ein Parallel - /Serie-Wandler nachgeschaltet ist.

## Claims

1. Method of data transmission according to the principle of time band segregation, with two data streams clocked in a plesiochronous manner, extending bi-directionally in a continual manner, which streams are divided into data packets on the transmission side in two transmission/receiver stations (SE1;SE2) connected to each other by way of a line, are transmitted in packets in a cycle (Zn) from the station (SE1) to the station (SE2) and then from the station (SE2) to the station (SE1) and, on the receiver side, converted again into a continual data stream, characterised in that the phase displacement between the cycles (ZSE1; ZSE2) running in a plesiochronous manner in both stations (SE1, SE2), dependent in each case on the extracted phases of the data signals to be transmitted or on the phases of a free-running oscillator stage, is measured in one station, and is held in each case by a shortening or lengthening of the cycle (ZSE2) with a corresponding shortening of lengthening of the data packet transmitted during this cycle to the other station by at least one user data bit within the preset limiting values.

2. Method according to claim 1, characterised in that the data packets contain a forward pattern, a directional synchronous word, at least one additional channel and one main channel.

3. Method according to claim 2, characterised in that each transmitted data packet in the additional channel contains information about the alteration or the correction of its length.

4. Method according to claim 3, characterised in that the information about the alteration of the packet length is contained several times at different points of the data packet in an additional channel.

5. Method according to claim 2, characterised in that the data of the main channel and of the additional channels are scrambled on the transmission side and descrambled on the receiver side.

6. Switch arrangement for data transmission with the principle of time band segregation with two data streams clocked in a plesiochronous manner, extending bi-directionally in a continual manner, which streams are divided into data packets on the transmission side in two transmission/receiver stations (SE1;SE2) connected to each other by way of a line, are transmitted in packets in a cycle (Zn) from the station (SE1) to the station (SE2) and then from the station (SE2) to the station (SE1) and, on the receiver side, converted again into a continual data stream, for carrying out a method according to claim 1, characterised in that the stations (SE1; SE2) have in each case a transmission side and receiver side cycle counter (ZZ11; ZZ21/ZZ12; ZZ22), the outputs of which are connected by way of addressing logic units (ALZ11, ALH11; ALZ21, ALH21/ALZ12, ALH12; ALZ22; ALH22) with main ring memories (HRS11; HRS21/HRS12; HRS22) and additional ring memories (ZRS11; ZRS21/ZRS12;ZRS22), in that the transmission side cycle counter (ZZ11;ZZ12) is connected on the input side to a phase extraction stage (TE), the input of which is supplied with a data signal (S₁₂, S₂₁), or to a free-running oscillator, and on the output side to a memory stage (VLM/SW) and a changeover switch (US), in that the transmission side ring memories (HRS11, ZRS11/HRS12, ZRS12), to which there are supplied on the input side data signals (S₁₂, ZS₁₂/S₂₁) or a correction information signal, are connected by way of the changeover switch (US) to a line (ZL) as is the memory stage (VLM/SW), in that the receiver side ring memories (HRS21, ZRS21/HRS22/ZRS22), the inputs of which are connected by way of the changeover switch (US) and a synchronous word stage and phase extraction stage (PS/TE) to the line (ZL), deliver the transmitted data signals (S₂₁/S₁₂,ZS₁₂) or the transmitted correction information signals to the cycle counter (ZZ21), in that the synchronous word stage and phase extraction stage (PS/TE) deliver extracted phase signals and synchronous words to the cycle counter (ZZ21), and in that the cycle counters (ZZ12; ZZ12) are connected by way of an output line to the input of a phase detector (PPD), the output of which is connected to the inputs of the additional ring memory (ZRS12) and the cycle counter (ZZ12).

7. Arrangement according to claim 6, characterised in that the outputs of the transmission side ring memories (HRS11, ZRS11/HRS12, ZRS12) are connected by way of a scrambler stage (SCR) to the line (ZL) and in that the inputs of the receiver side ring memories (HRS12/ZRS12/HRS22, ZRS22) are connected by way of a descrambler stage (DSCR) with the synchronous word stage and phase extraction stage (PS/TE).

8. Arrangement according to claim 6 or 7, characterised in that a series/parallel transducer is connected before all ring memories used and a parallel/series transducer is connected after all ring memories used.

## Revendications

1. Procédé de transmission de données selon le principe de communication à l'alternat, et à deux flux de données qui circulent continûment dans les deux sens, sont cadencés de façon plésiochrone et qui sont subdivisés, côté émission, en des paquets de données, dans deux postes d'émission/réception (SE1; SE2) reliés entre eux par l'intermédiaire d'une ligne, sont transmis par paquets au cours d'un cycle (Zn) du poste (SE1) au poste (SE2) et ensuite du poste (SE2) au poste (SE1) et sont à nouveau convertis, côté réception, en un flux de données continu, caractérisé par Le fait que le déphasage entre les cycles (ZSE1; ZSE2), qui dépendent respectivement des cadences extraites des signaux de données devant être transmis ou des cadences d'un étage oscillateur fonctionnant en régime libre et qui se déroulent d'une manière plésiochrone dans les deux postes (SE1, SE2), est mesuré dans l'un des postes et est maintenu à l'intérieur de valeurs limites prédéterminées, respectivement moyennant une réduction ou un allongement du cycle (ZSE2) avec un raccourcissement ou un allongement correspondant du paquet de données émis pendant ce cycle en direction de l'autre poste, et ce sur au moins un bit de données utiles.

2. Procédé suivant la revendication 1, caractérisé par le fait que les paquets de données contiennent un modèle préliminaire, un mot de synchronisation qui dépend du sens, au moins un canal supplémentaire et un canal principal.

3. Procédé suivant la revendication 2, caractérisé par le fait que chaque paquet de données transmis dans le canal supplémentaire contient des informations concernant la modification ou la correction de sa longueur.

4. Procédé suivant la revendication 3, caractérisé par le fait que les informations concernant la modification de la longueur des paquets sont contenues plusieurs fois en des emplacements différents du paquet de données, dans un canal supplémentaire.

5. Procédé suivant la revendication 2, caractérisé par le fait que les données du canal principal et des canaux supplémentaires sont embrouillées côté émission et sont désembrouillées côté réception.

6. Montage de transmission de données selon le principe de communication à l'alternat, et à deux flux de données qui circulent continûment dans les deux sens, sont cadencés de façon plésiochrone et qui sont subdivisés, côté émission, en des paquets de données, dans deux postes d'émission/réception (SE1; SE2) reliés entre eux par l'intermédiaire d'une ligne, sont transmis par paquets au cours d'un cycle (Zn) du poste (SE1) au poste (SE2) et ensuite du poste (SE2) au poste (SE1) et sont à nouveau convertis, côté réception, en un flux de données continu, pour la mise en oeuvre d'un procédé suivant la revendication 1, caractérisé par le fait que les postes (SE1; SE2) comportent chacun un compteur de cycles côté émission et côté réception (ZZ11; ZZ21/ZZ12;ZZ22), dont les sorties sont reliées, par l'intermédiaire d'unités logiques d'adressage (ALZ11,ALH11; ALZ21,ALH21/ALZ12,ALH12; ALZ22,ALH22), à des mémoires principales en anneau (HRS11; HRS21/HRS12; HRS22) et à des mémoires additionnelles en anneau (ZRS11; ZRS21/ZRS12; ZRS22), que les compteurs de cycles (ZZ11; ZZ12) situés côté émission sont reliés, côté entrée, à un étage (TE) d'extraction de la cadence, à l'entrée duquel est envoyé un signal de données (s₁₂, s₂₁), ou un oscillateur fonctionnant en régime libre et, côté sortie, un étage de mémoire (VLM/SW) et un commutateur (US), que les mémoires en anneau (HRS11, ZRS11/HRS12, ZRS12), situées côté émission et à l'entrée desquelles sont envoyés des signaux de données (s₁₂, sz₁₂/s₂₁) ou un signal d'information de correction, et l'étage de mémoire (VLM/SW) sont connectés à une Ligne (ZL) par l'intermédiaire du commutateur (US), que Les mémoires en anneau (HRS21, ZRS21/HRS22, ZRS22), situées côté réception et dont les entrées sont reliées à la ligne (ZL) par l'intermédiaire du commutateur (US) et d'un étage (PS/TE) d'extraction des mots de synchronisation et de la cadence, envoient les signaux de données transmis (s₂₁/s₁₂, zs₁₂) ou le signal d'information de correction transmis, au compteur de cycles (ZZ21), que l'étage (PS/TE) d'extraction de mots de synchronisation et de la cadence envoie des signaux extraits de cadence et des mots de synchronisation extraits, au compteur de cycles (ZZ21), et que les compteurs de cycles (ZZ12; ZZ22) sont reliés, par l'intermédiaire d'une ligne de sortie, à l'entrée d'un détecteur de phase (PPD), dont la sortie est reliée à des entrées d'une mémoire en anneau supplémentaire (ZRS12) et du compteur de cycles (ZZ12).

7. Dispositif suivant la revendication 6, caractérisé par Le fait que les sorties des mémoires en anneau (HSR11, ZRS11/HSR12, ZRS12) situées côté émission sont reliées, par l'intermédiaire d'un étage de brouillage (SCR), à la ligne (ZL) et que Les entrées des mémoires en anneau (HRS12, ZR12/HSR22, ZRS22) situées côté réception sont reliées à l'étage (PS/TE) d'extraction de mots de synchronisation et de la cadence, par l'intermédiaire d'un étage désembrouilleur (DSCR).

8. Dispositif suivant la revendication 6 ou 7, caractérisé par le fait qu'un convertisseur série/parallèle est branché en amont de toutes les mémoires en anneau utilisées et qu'un convertisseur parallèle/série est branché en aval de toutes les mémoires en anneau utilisées.
